# FASCICULE DE BREVET EUROPEEN

(11) **EP 1 774 282 B1**
(45) Date de publication et mention de la délivrance du brevet: **23.03.2011**
(21) Numéro de dépôt: 05783873.2
(22) Date de dépôt: 01.07.2005
(51) Int. Cl.: G01N 11/04, G01N 11/14

(54) **CELLULE CYLINDRIQUE REGULEE EN TEMPERATURE, DESTINEE A UN RHEOMETRE.**
TEMPERATURGESTEUERTE ZYLINDRISCHE ZELLE FÜR EIN THERMOMETER
TEMPERATURE CONTROLLABLE CYLINDRICAL CELL FOR A RHEOMETER

(30) Priorité: 12.07.2004 FR 0407741
(43) Date de publication de la demande: 18.04.2007
(73) Titulaire: Compagnie Gervais Danone, 75009 Paris (FR)
(72) Inventeur: ALVAREZ LEGUIZAMO, Graciela, F-92160 ANTONY (FR)
(74) Mandataire: Jacquard, Philippe Jean-Luc
(86) Numéro de dépôt international: PCT/FR2005/001683
(87) Numéro de publication internationale: WO 2006/016034

(56) Documents cités:
- EP-A- 0 483 619
- US-A- 4 445 365
- US-A- 4 480 981
- US-A- 4 587 837
- US-A- 5 517 594

## Description

La présente invention a pour objet une cellule cylindrique régulée en température équipée d'un bol et qui présente au moins un élément de chauffage électrique.

La Société ANTON PAAR GmbH commercialise des cellules de ce type dont le chauffage est réalisé notamment par effet Peltier. La vitesse maximale de chauffage, obtenu par chauffage électrique, est de l'ordre de 36 °C par minute, soit 0,6 °C par seconde.

L'évolution des techniques expérimentales fait qu'il est souhaitable d'améliorer les performances des rhéomètres, notamment en ce qui concerne la vitesse de chauffage et/ou de refroidissement, et notamment de leur permettre d'atteindre des pointes de l'ordre de 1 °C par seconde voire plus, dans un espace annulaire compris entre un cylindre mobile et la paroi interne d'un bol thermostaté.

On ne connaît pas actuellement de rhéomètre capable d'atteindre une telle performance.

Par exemple, le Brevet US 5,258,601 (SHIMADZU CORPORATION) décrit un rhéomètre à chauffage par résistances hélicoïdales noyées dans un ciment, le chauffage s'effectuant par zones successives et distinctes espacées axialement.

La demande de Brevet US 2003/0056575 (THERMO-HAAKE GmbH) concerne un rhéomètre rotatif régulé en température par un gaz circulant dans un espace annulaire qui est chauffé par une résistance hélicoïdale.

L'idée de base de l'invention est d'incorporer des résistances chauffantes linéaires dans une paroi en matériau thermiquement conducteur qui entoure l'espace annulaire de mesure, situé entre un cylindre mobile et la face interne de la paroi.

L'invention concerne ainsi une cellule régulée en température et comportant un dispositif de régulation thermique ainsi qu'une cellule équipée d'un bol thermostaté présentant une région cylindrique et d'un cylindre mobile coaxial à la région cylindrique du bol thermostaté et présentant un espace annulaire de mesure entre le cylindre mobile et ladite région cylindrique, caractérisé en ce que la région cylindrique est en matériau thermiquement conducteur et présente N ouvertures dans lesquelles sont logées N résistances chauffantes tubulaires ayant un axe sensiblement parallèle audit axe de la région cylindrique, et qui sont alimentées par le dispositif de régulation thermique.

Les résistances chauffantes sont avantageusement alimentées en parallèle. Elles peuvent être régulièrement espacées sur le pourtour de la région cylindrique du bol thermostaté.

Des thermocouples sont avantageusement intercalés entre les résistances et sont connectés à des entrées du dispositif de régulation thermique. Ceci permet d'obtenir une mesure précise de la température et de compenser des inégalités de températures sur le pourtour du bol, et également de détecter un défaut sur l'une des résistances. Par exemple, pour N pair, le nombre de thermocouples est égal à N/2, ce qui assure une précision suffisante pour la régulation tout en dégageant des espaces entre les résistances électriques pour d'autres fonctions (mise sous pression, introduction d'échantillons, et/ou prélèvement d'échantillons).

Le nombre N de résistances électriques peut être compris entre 4 et 16, notamment entre 6 et 10, et plus particulièrement, il est égal à 8.

Pour assurer une fonction de refroidissement, la cellule comporte avantageusement un générateur de fluide caloporteur de refroidissement qui alimente un échangeur qui entoure la paroi externe de la région cylindrique du bol thermostaté.

Il est avantageux que cet échangeur comporte un canal usiné dans le bol thermostaté, et dont un bord constitue au moins une partie de ladite paroi externe de sorte que le fluide caloporteur soit en contact avec ladite paroi externe de la région cylindrique du bol thermostaté, pour une optimisation des échanges thermiques.

La cellule peut alors être caractérisée en ce que ledit échangeur comporte un canal de fluide frigoporteur constitué par une ailette hélicoïdale de la paroi externe de la région cylindrique du bol thermostaté, et en ce que le bol thermostaté est placé dans une enveloppe cylindrique ayant une paroi interne sensiblement en contact avec un contour externe de l'ailette hélicoïdale de manière à refermer le canal hélicoïdal de fluide frigoporteur.

Le bol thermostaté peut présenter un canal de mise sous pression en communication avec une arrivée de fluide comprimé.

Le bol thermostaté peut présenter un canal d'introduction d'un échantillon et/ou un canal de prélèvement d'un échantillon.

L'invention sera mieux comprise à la lecture de la description ci-après, liaison avec les dessins dans lesquels :
- la figure 1 est une vue éclatée d'une cellule d'un rhéomètre selon un mode de réalisation préféré de l'invention,
- la figure 2 est une coupe longitudinale qui illustre notamment une mise sous pression de la cellule,
- les figures 3a à 3f illustrent la position des résistances électriques, des thermocouples, et de canaux de mise sous pression, d'introduction d'échantillons et de prélèvement d'un échantillon.
- les figures 4a à 4e représentent un bol thermostaté selon un mode de réalisation préféré de l'invention, respectivement en vus latérale (4a), en vue de dessus (4b), en coupe AA (4c), en coupe BB (4d) et en coupe CC (4e).
- la figure 5 représente un corps entourant le bol thermostaté formant une double enveloppe en définissant un canal de refroidissement.

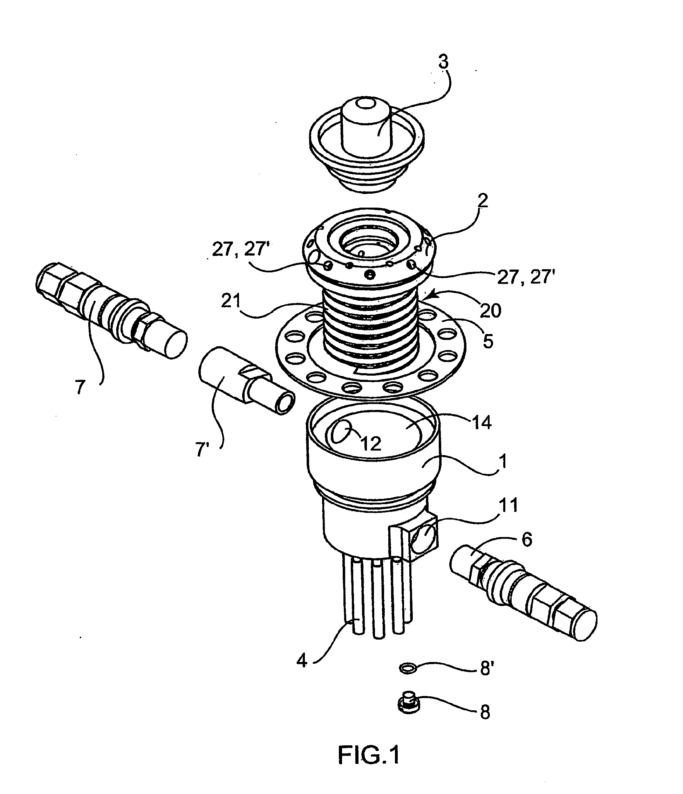

A la figure 1, la cellule de mesure d'un rhéomètre de type « couette » selon l'invention comporte une enveloppe cylindrique 1, un bol thermostaté 2, un bouchon 3 de fermeture du bol 2, une collerette de fixation 5, un raccord 6 d'arrivée de fluide frigoporteur à une ouverture inférieure 11 de l'enveloppe externe 1, ainsi qu'un raccord 7 de sortie de fluide frigoporteur connecté par l'intermédiaire d'une rallonge éventuelle 7' à une ouverture supérieure 12 de l'enveloppe externe 1. Un bouchon 8 et un joint 8' servent à obturer la partie inférieure d'une ouverture d'introduction d'échantillon.

Le repère 4 désigne les résistances chauffantes introduites par le bas dans des ouvertures correspondantes de la région cylindrique 20 du bol 2.

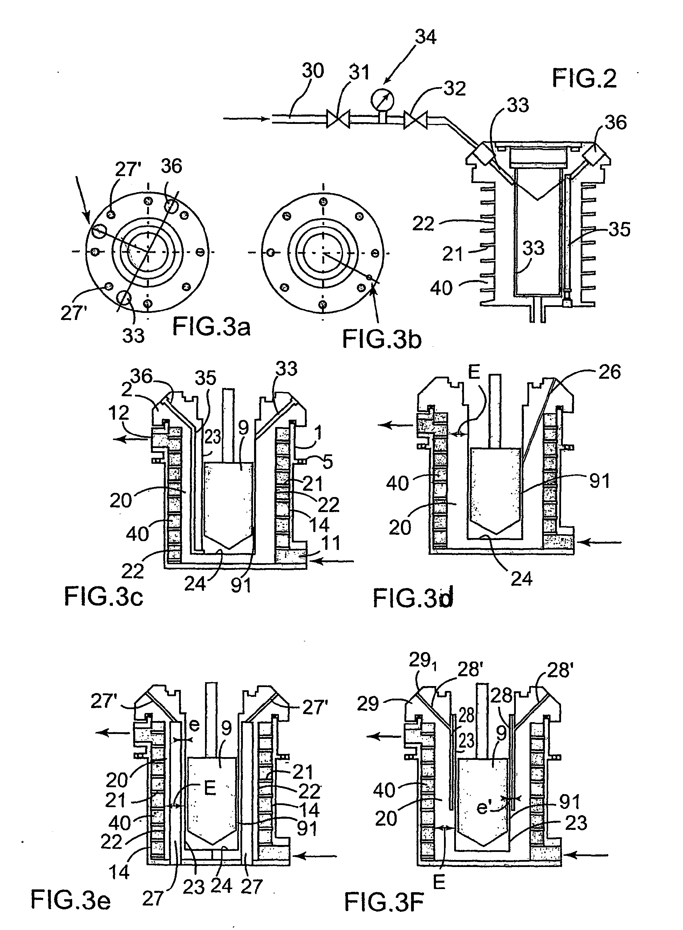

La figure 2 montre en coupe un canal 33 de mise sous pression du bol 2, alimenté par une canalisation d'air comprimé 30 sur laquelle sont installées des vannes 31 et 32 et un manomètre 34.

Comme le montrent les figures 3a à 3f, la cellule comporte le bol 2, et l'enveloppe cylindrique 1 qui permet de former un ensemble à double enveloppe permettant une circulation du fluide frigoporteur le long d'un canal hélicoïdal défini, entre l'entrée 11 et la sortie 12, par la rampe hélicoïdale 21, la paroi externe cylindrique 22 du bol 2 et la face interne cylindrique 14 de l'enveloppe 1. Un espace annulaire de mesure 91, par exemple d'épaisseur comprise entre 2 mm et 0,5 mm et par exemple égale à 1 mm, est défini par le jeu existant entre un cylindre mobile 9 et la paroi cylindrique interne 23 de la région cylindrique 20 du bol 2.
La figure 3c montre un conduit 25 d'introduction d'échantillon qui débouche au voisinage du fond 24 du bol 2 alors que la figure 3d montre un conduit 26 de prélèvement d'échantillon dans l'espace annulaire 91. Le volume d'un échantillon introduit est de l'ordre de 15 ml, le volume utile situé dans l'espace annulaire 91 étant de l'ordre de 3 ml.
La figure 3e montre les ouvertures cylindriques longitudinales 27 servant de logement aux résistances électriques 4, et les canaux inclinés 27' servant à l'alimentation électrique, de préférence en parallèle, de ces résistances chauffantes 4.
La figure 3f montre les canaux cylindriques longitudinaux 28 servant à loger des thermocouples et les canaux inclinés 28' d'alimentation électrique de ces thermocouples.

Les canaux cylindriques 27 sont usinés de manière à laisser subsister une épaisseur résiduelle e minimale comprise entre 1 et 3 mm et plus particulièrement entre 1 et 2 mm, de préférence de l'ordre de 1 mm, ce qui favorise le chauffage rapide de l'espace annulaire de mesure 91, qui est lui-même d'épaisseur réduite.

L'épaisseur E de la paroi cylindrique du bol 2 peut être réduite au strict nécessaire pour assurer la cohésion mécanique de l'ensemble lors d'un fonctionnement sous pression (par exemple E ≅10 mm).

Les thermocouples logés dans les canaux 28 peuvent être disposés au plus près de la face interne 23 et notamment entre 1 et 2 mm (par exemple e' = 1mm) de manière à permettre la meilleure prise de température dans l'espace annulaire 91, dans lequel la température doit être régulée. La prise de température s'effectue avantageusement à mi-hauteur de l'espace annulaire 91.

L'utilisation de deux dispositifs différents, l'un à fluide pour le refroidissement et l'autre à résistances pour le chauffage, permet d'optimiser la cinétique aussi bien en refroidissement qu'en chauffage.

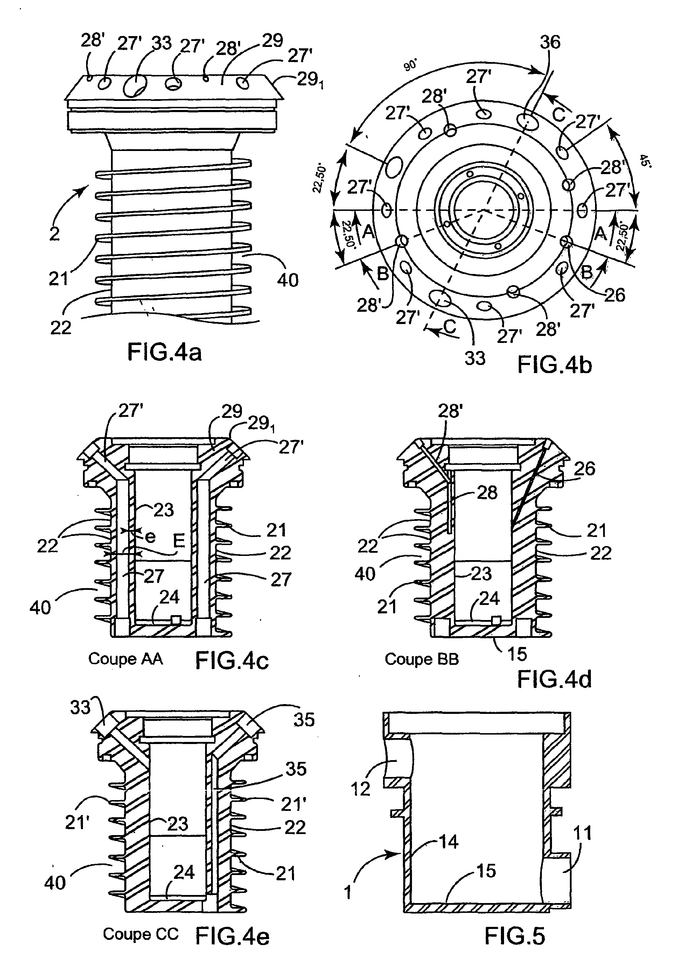

Les figures 4a à 4e et 5 montrent plus en détail le bol thermostaté 2 et l'enveloppe 1.

Diverses ouvertures fonctionnelles sont ménagées dans la région tronconique 29₁ de la tête 29 du bol thermostaté.

On y trouve le débouché des 8 canaux 27' destinés au passage de l'alimentation électrique des huit résistances 4 logées dans les canaux longitudinaux 27 (voir aussi figure 4e).

On y trouve également les débouchés des 4 canaux 28' destinés à la prise de contact électrique des 4 thermocouples logés dans les canaux longitudinaux 28 (voir aussi figure 4d), répartis à 90° sur le pourtour du bol 2.

On y trouve également le débouché du canal 26 de prélèvement d'échantillon dans l'espace annulaire de mesure 91 (voir aussi figure 4d).

On y trouve enfin le débouché des canaux 33 de mise sous pression et 36 du canal 35 d'introduction d'échantillon au fond 24 du bol 2 (voir aussi figure 4e).

Au moins certains des canaux peuvent être réalisés par électroérosion.

Représentée en coupe à la figure 5, l'enveloppe 1 présente une paroi cylindrique interne 14 dont le diamètre est sensiblement le même que celui de l'extrémité 21' de l'ailette hélicoïdale usinée 21, ce qui apporte un quatrième côté qui referme le canal hélicoïdal, et permet le cheminement du fluide de refroidissement, par exemple une huile silicone, entre l'entrée 11 et la sortie 12.

En pratique, le bol 2 pourvu de son couvercle est surmontée par la partie supérieure d'une cellule de commerce de type « PHYSICA » qui comporte un accouplement magnétique permettant d'assurer la rotation du mobile cylindrique 9 pour permettre une mesure rhéologique dans l'espace annulaire 91. Le bol et son enveloppe sont placés sur une platine permettant leur fixation sur le rhéomètre « PHYSICA » USD 200. Le bol 2 est réalisé de préférence en aluminium et est équipé de 8 résistances de marque VULCANIC de puissance 300 W (diamètre 6,5 mm) connectées en parallèle, qui sont régulièrement réparties autour de la cuve et placées par exemple à une distance e = 2 mm de la face intérieure 23. Les thermocouples sont disposés à 90° les uns des autres autour du périmètre et placés de manière équidistante entre deux résistances 4.

Ils sont disposés par exemple à e'= 1 mm de la face interne 23 de manière à suivre au plus près les cinétiques de chauffage et de refroidissement.

L'épaisseur E de la région cylindrique 20 du bol 2 peut être de l'ordre de 10 mm.

Le dispositif à double enveloppe permet une circulation du fluide refroidisseur avec une surface d'échange optimale.

En particulier, l'ailette hélicoïdale usinée 21 contribue à l'efficacité des échanges thermiques. De plus, on peut utiliser un fluide à basse température, par exemple - 40° C. En pratique, on utilise une huile silicone RHODORSIL 47 V2 refroidie dans un dispositif de type cryostat à une température choisie entre 20° C et - 40° C, le débit d'huile pouvant varier entre 0 et 30 litres par minute.

On obtient ainsi une bonne cinétique de chauffage et de refroidissement dans une gamme de température comprise par exemple entre 20° C et 120° C.

Les meilleures performances obtenues sont de 4° C/s en chauffage et 3° C/s en refroidissement.

## Revendications

1. Cellule cylindrique destinée à un rhéomètre et équipée d'une part d'un bol thermostaté présentant une région cylindrique et d'autre part d'un cylindre mobile coaxial à la région cylindrique du bol thermostaté, la cellule présentant un espace annulaire de mesure entre le cylindre mobile et ladite région cylindrique, **caractérisé en ce que** ladite région cylindrique (20) est en matériau thermiquement conducteur et présente N ouvertures (27) dans lesquelles sont logées N résistances chauffantes tubulaires (4) ayant un axe sensiblement parallèle audit axe de la région cylindrique (20), et qui sont alimentées par le dispositif de régulation thermique.

2. Cellule selon la revendication 1, **caractérisée en ce que** les résistances chauffantes (4) sont régulièrement espacées sur le pourtour de la région cylindrique (20) du bol thermostaté (2).

3. Cellule selon une des revendications 1 ou 2, **caractérisée en ce que** les résistances chauffantes (4) sont alimentées en parallèle.

4. Cellule selon une des revendications 1 à 3, **caractérisée en ce que** des thermocouples sont intercalés avec les résistances chauffantes (4) et sont connectées à des entrées du dispositif de régulation thermique.

5. Cellule selon la revendication 4, **caractérisée en ce que** N est pair et **en ce que** le nombre de thermocouples est égal à N/2.

6. Cellule selon une des revendications principales, **caractérisée en ce que** N est compris entre 4 et 16.

7. Cellule selon la revendication 6, **caractérisée en ce que** N est compris entre 6 et 10.

8. Cellule selon la revendication 7, **caractérisée en ce que** N est égal à 8.

9. Cellule selon une des revendications précédentes **caractérisée en ce que** les résistances chauffantes (4) et/ou les thermocouples sont espacées de la paroi interne (23) de ladite région cylindrique (20) d'une distance (e, e') comprise entre 1 et 2 mm.

10. Cellule selon une des revendications précédentes, **caractérisée en ce qu'**il comprend un générateur de fluide frigoporteur qui alimente un échangeur qui entoure la paroi externe (22) de la région cylindrique (20) du bol thermostaté (2).

11. Cellule selon la revendication 10, **caractérisée en ce que** l'échangeur comporte un canal (40) usiné dans la région cylindrique (20) du bol thermostaté (2) et dont un bord interne constitue au moins une partie de ladite paroi externe (22) de la région cylindrique du bol thermostaté.

12. Cellule selon la revendication 11, **caractérisée en ce que** ledit canal (40) de fluide de refroidissement est constitué par une ailette hélicoïdale (21) de la paroi externe (22) de la région cylindrique du bol thermostaté (2), et **en ce que** le bol thermostaté (2) est placé dans une enveloppe cylindrique (1) ayant une paroi interne (14) sensiblement en contact avec un contour externe (21') de l'ailette hélicoïdale (21) de manière à refermer le canal hélicoïdal (40) de fluide frigoporteur.

13. Cellule selon une des revendications principales, **caractérisée en ce que** le bol thermostaté (2) présente un canal (33) de mise sous pression qui communique avec une arrivée (30) de fluide comprimé.

14. Cellule selon une des revendications précédentes, **caractérisée en ce que** le bol thermostaté (2) présente un canal (35, 36) d'introduction d'un échantillon débouchant au fond (24) du bol thermostaté (2) et/ou un canal (26) de prélèvement d'échantillon dans l'espace annulaire (91) de mesure.

## Claims

1. Cylindrical cell designed for a rheometer and equipped with a thermostatically controlled bowl with a cylindrical region on the one hand and a mobile cylinder coaxial with the cylindrical region of the thermostatically controlled bowl on the other hand, which cell has an annular measuring space between the mobile cylinder and said cylindrical region, **characterised in that** said cylindrical region (20) is made from a heat-conductive material and has N openings (27) in which N tubular heating resistors (4) with an axis substantially parallel with said axis of the cylindrical region (20) are accommodated, and which are supplied by the heat regulating device.

2. Cell as claimed in claim 1, **characterised in that** the heating resistors (4) are spaced regularly around the periphery of the cylindrical region (20) of the thermostatically controlled bowl (2).

3. Cell as claimed in one of claims 1 or 2, **characterised in that** the heating resistors (4) are supplied in parallel.

4. Cell as claimed in one of claims 1 to 3, **characterised in that** thermocouples are disposed in alternation with the heating resistors (4) and are connected to inputs of the heat regulating device.

5. Cell as claimed in claim 4, **characterised in that** N is an even number and the number of thermocouples is equal to N/2.

6. Cell as claimed in one of the main claims, **characterised in that** N is between 4 and 16.

7. Cell as claimed in claim 6, **characterised in that** N is between 6 and 10.

8. Cell as claimed in claim 7, **characterised in that** N is equal to 8.

9. Cell as claimed in one of the preceding claims, **characterised in that** the heating resistors (4) and/or the thermocouples are spaced apart from the internal wall (23) of said cylindrical region (20) by a distance (e, e') of between 1 and 2 mm.

10. Cell as claimed in one of the preceding claims, **characterised in that** it has a refrigerant fluid generator which supplies an exchanger surrounding the external wall (22) of the cylindrical region (20) of the thermostatically controlled bowl (2).

11. Cell as claimed in claim 10, **characterised in that** the exchanger comprises a passage (40) machined into the cylindrical region (20) of the thermostatically controlled bowl (2) and one internal edge thereof constitutes at least a part of said external wall (22) of the cylindrical region of the thermostatically controlled bowl.

12. Cell as claimed in claim 11, **characterised in that** said passage (40) for refrigerant fluid is formed by a helical fin (21) of the external wall (22) of the cylindrical region of the thermostatically controlled bowl (2), and the thermostatically controlled bowl (2) is placed in a cylindrical jacket (1) with an internal wall (14) substantially in contact with an external contour (21') of the helical fin (21) so as to close off the helical passage (40) for the refrigerant fluid.

13. Cell as claimed in one of the main claims, **characterised in that** the thermostatically controlled bowl (2) has a pressurised passage (33) which communicates with a compressed fluid inlet (30).

14. Cell as claimed in one of the preceding claims, **characterised in that** the thermostatically controlled bowl (2) has a passage (35,36) opening into the base (24) of the thermostatically controlled bowl (1) for introducing a sample and/or a passage (26) for taking a sample from the annular measuring space (91).

## Patentansprüche

1. Zylindrische Zelle, welche für ein Rheometer bestimmt ist und ausgestattet ist mit einerseits mit einer Thermostatschale, welche einen zylindrischen Bereich aufweist, und andererseits einen beweglichen Zylinder, welcher koaxial zu dem zylindrischen Bereich der Thermostatschale ist, wobei die Zelle einen ringförmigen Messraum zwischen dem beweglichen Zylinder und dem zylindrischen Bereich aufweist, **dadurch gekennzeichnet, dass** der zylindrischen Bereich (20) ein thermisch leitfähiges Material ist und N Öffnungen (27) aufweist, in welchen N röhrenförmige Heizwiderstände (4) untergebracht sind, welche eine Achse aufweisen, die im Wesentlichen parallel zu der Achse des zylindrischen Bereichs (20) ist, und welche durch die Wärmeregulationsvorrichtung gespeist sind.

2. Zelle nach Anspruch 1, **dadurch gekennzeichnet, dass** die Heizwiderstände (4) auf dem Umfang des zylindrischen Bereichs (20) der Thermostatschale (2) regelmäßig beabstandet sind.

3. Zelle nach einem der Ansprüche 1 oder 2, **dadurch gekennzeichnet, dass** die Heizwiderstände (4) parallel gespeist sind.

4. Zelle nach einem der Ansprüche 1 bis 3, **dadurch gekennzeichnet, dass** Thermoelemente mit den Heizwiderständen (4) verschachtelt sind und mit den Eingängen der Wärmeregulationsvorrichtung verbunden sind.

5. Zelle nach Anspruch 4, **dadurch gekennzeichnet, dass** N gerade ist und dass die Anzahl von Thermoelementen gleich N/2 ist.

6. Zelle nach einem der wesentlichen Ansprüche, **dadurch gekennzeichnet, dass** N zwischen 4 und 16 enthalten ist.

7. Zelle nach Anspruch 6, **dadurch gekennzeichnet, dass** N zwischen 6 und 10 enthalten ist.

8. Zelle nach Anspruch 7, **dadurch gekennzeichnet, dass** N gleich 8 ist.

9. Zelle nach einem der vorhergehenden Ansprüche, **dadurch gekennzeichnet, dass** die Heizwiderstände (4) und/oder die Thermoelemente von der Innenwand (23) des zylindrischen Bereichs (20) um einen Abstand (e, e') beabstandet sind, welcher zwischen 1 und 2 mm enthalten ist.

10. Zelle nach einem der vorhergehenden Ansprüche, **dadurch gekennzeichnet, dass** sie einen Kühlfluidgenerator umfasst, welcher einen Tauscher speist, der die Außenwand (22) des zylindrischen Bereichs (20) der Thermostatschale (2) umgibt.

11. Zelle nach Anspruch 10, **dadurch gekennzeichnet, dass** der Tauscher einen Kanal (40) umfasst, welcher in den zylindrischen Bereich (20) der Thermostatschale (2) eingearbeitet ist und von welchem ein innerer Rand wenigstens einen Teil der Außenwand (22) des zylindrischen Bereichs der Thermostatschale bildet.

12. Zelle nach Anspruch 11, **dadurch gekennzeichnet, dass** der Kanal (40) für das Kühlfluid gebildet ist durch einen spiralförmigen Flügel (21) der Außenwand (22) des zylindrischen Bereichs der Thermostatschale (2), und dass die Thermostatschale (2) in einer zylindrischen Hülle (1) angeordnet ist, welche eine Innenwand (14) aufweist, die im Wesentlichen in Kontakt mit einer Außenkontur (21') des spiralförmigen Flügels (21) ist, sodass der spiralförmige Kanal (40) für Kühlfluid verschlossen wird.

13. Zelle nach einem der wesentlichen Ansprüche, **dadurch gekennzeichnet, dass** die Thermostatschale (2) einen Kanal (33) zur Druckbeaufschlagung aufweist, welcher mit einer Zufuhr (30) für komprimiertes Fluid kommuniziert.

14. Zelle nach einem der vorhergehenden Ansprüche, **dadurch gekennzeichnet, dass** die Thermostatschale (2) einen Kanal (35, 36) zur Einführung einer Probe, welcher am Boden (24) der Thermostatschale (2) mündet, und/oder einen Kanal (26) zur Entnahme der Probe in dem ringförmigen Messraum (91) aufweist.
